# EUROPEAN PATENT SPECIFICATION

(11) **EP 2 534 376 B1**
(45) Date of publication and mention of the grant of the patent: **29.07.2015**
(21) Application number: 10728622.1
(22) Date of filing: 09.06.2010
(51) Int. Cl.: F03D 11/04, E04H 12/08, F03D 1/00

(54) **WALL PORTION FOR A TOWER OF A WIND TURBINE**
WANDTEIL FÜR EINEN TURM EINER WINDTURBINE
PARTIE DE LA PAROI D'UNE TOUR DE TURBINE ÉOLIENNE

(30) Priority: 12.03.2010 EP 10156336
(43) Date of publication of application: 19.12.2012
(73) Proprietor: Siemens Aktiengesellschaft, 80333 München (DE); Andresen Towers A/S, 5550 Langeskov (DK)
(72) Inventor: JENSEN, Steen, Kirkegaard, DK-8660 Skanderborg (DK); RASMUSSEN, Anders, Nygaard, DK-2200 Kobenhavn (DK)
(86) International application number: PCT/EP2010/058052
(87) International publication number: WO 2011/110234

(56) References cited:
- EP-A1- 2 006 471
- EP-A1- 2 136 017
- WO-A1-2004/083633
- WO-A1-2009/097858
- WO-A2-2005/075763
- US-A1- 2006 236 648
- US-A1- 2008 256 892
- US-B1- 6 957 518
- US-B1- 7 464 512

## Description

### Field of invention

The present invention relates to a wall portion for a tower of a wind turbine and to a wind turbine tower wall comprising the wall portion. In particular, the present invention relates to a wall portion for a tower of a wind turbine comprising three wall segments being connected by flanges and being connected using a connection plate and a further connection plate.

### Art Background

US 2008/0256892 A1 discloses a wind energy plant tower, wherein a tower wall consists of a plurality of wall sections which comprise connection bores to connect to adjacent border sections in the longitudinal direction.

WO 2009/097858 discloses a tower element for a tower for a wind power plant, wherein the tower element is provided with inwardly facing flanges at the longitudinal sides, the flanges being connected to corresponding flanges on laterally arranged segments.

EP 2 136 017 A1 discloses an upper tower ring and a lower tower ring arranged such that a bottom section of the upper ring overlaps the top section of the lower ring in a horizontal overlap region.

WO 2004/083633 discloses a tower section for a wind turbine, wherein vertical flanges are tightened together by bolts and wherein upper and lower horizontal flanges are provided to allow interconnection of tower sections one on top of each other.

EP 2 006 471 B1 discloses a wind turbine tower having a polygonal cross-section, wherein the wind turbine tower comprises a number of segments which are connected with each other using a splice plate.

Document US 2006/0236648 A1 discloses means for securing the lower end of a wind turbine tower to a foundation, wherein a connection member is secured to a foundation. A sheet is bent or broken along break lines and the break lines form edge portions. Upper ends of the splice plates are described with a plurality of bolt openings formed therein which register with the bolt openings formed in the inwardly extending edge portions and bolts are then extended through the splice plates.

Document WO 2005/075763 A2 discloses a tower for a wind turbine, wherein the tower has an exterior side and an interior side and wherein the tower is at least partly composed of pre-fabricated metal wall parts characterized in that each wall part comprises an essentially quadrangular portion having an outwardly facing surface in the direction of the exterior of the tower and an inwardly facing surface in the direction of the interior of the tower.

Document US 6,957,518 B1 discloses a two-plate splice connection assembly wherein splice plates and are positioned on opposite sides of the shaft walls of the upper and lower pole members and a plurality of bolts extend through openings in splice plate, through openings in pole members, through openings in splice plate and have nuts threadably secured to the outer end thereof.

Document US 7,464,512 B1 dislcoses a wind turbine tower comprising a plurality of elongated hollow pole sections secured together.

There may be a need for a wall portion for a tower of a wind turbine which allows assembly of a large tower of a wind tur bine, wherein the tower of the wind turbine has increased size (diameter, height) compared to a conventional wind turbine tower and also has sufficient stability and stiffness in rough environments. Further, there may be a need for a wall portion for a tower of a wind turbine which can easily be assembled and which has a sufficient stability to be used in a tower of a wind turbine. Further, there may be a need for a wind turbine tower wall for assembling a wind turbine, wherein the wind turbine tower wall has increased size (diameter, height) compared to a conventional wind turbine tower and which provide an optimized construction.

### Summary of the Invention

This need may be met by the subject matter according to the independent claim. Advantageous embodiments of the present invention are described by the dependent claims.

According to an embodiment the wall portion for a tower of a wind turbine comprises a first wall segment having a first flange at a lateral side of the first wall segment; a connection plate having a surface portion being mounted at a front side surface portion of the first wall segment, the connection plate protruding an edge at another lateral side of the first wall segment; a second wall segment having a second flange at a lateral side of the second wall segment, wherein the second flange is mechanically connected to the first flange; and a third wall segment, wherein another surface portion of the connection plate is mounted at a front side surface portion of the third wall segment, the connection plate protruding an edge at a lateral side of the third wall segment, wherein the first flange and the second flange extend in a longitudinal direction of the tower of the wind turbine. Thereby, the wall portion further comprises: a fur ther connection plate a surface portion of which being mounted at a back side surface portion of the first wall segment, wherein the back side surface portion of the first wall segment is opposite to the front side portion of the first wall segment, wherein another surface portion of the further connection plate is mounted at a back side surface portion of the third wall segment, and wherein the back side surface portion of the third wall segment is opposite to the front side portion of the third wall segment, wherein a thickness of the connection plate and the further connection plate amounts to at least half of a thickness of each of the first wall segment and the third wall segment and to less than the thickness of each of the first wall segment and the third wall segment.

The first wall segment, the second wall segment, and the third wall segment may each comprise a plate-like structure extending primarily in two different lateral directions and further extending in a thickness direction perpendicular to the two lateral directions. Thereby, an extent of the first wall segment, the second wall segment and/or the third wall segment in the lateral directions may be much larger (such as 10 times, 100 times, 1000 times) than the extent of the first wall segment, the second wall segment, and/or the third wall segment in the thickness direction. For example, an extent in the thickness direction of the three wall segments may range between 20 mm to 100 mm, in particular between 30 mm and 70 mm. For example, an extent of the first wall segment, the second wall segment, and/or the third wall segment in at least one of the lateral directions may amount to between 1 m to 5 m, in particular between 2 m and 4 m.

In particular the first, the second and the third wall segments may comprise a metal, such as steel, iron and/or copper. In particular, the first wall segment, the second wall segment and/or the third wall segment may be planar plates, may be segments of a cylinder, may be segments of a cone, or may be a combination of the aforementioned geometrical shapes. In particular, the first wall segment, the second wall segment and the third wall segment may be substantially of a same shape.

The first wall segment, the second wall segment and the third wall segment (also referred to as the three wall segments) may each comprise at least one flange. Thereby, the flange may comprise a protruding rim at a lateral side of the corresponding wall segment, wherein the rim protrudes perpendicular to the lateral directions (i.e. in the thickness direction). A front side surface portion (or a backside surface portion) of one of the three wall segments may include an angle with a flange connection surface (for connecting adjacent flanges of two different of the three wall segments), wherein this angle may amount to between 70° and 120°, in particular between 80° and 100°, in particular around 90°. Further, the first flange may comprise at least one bore (or a hole) for inserting a bolt or a screw which may also reach through a bore or a hole in the second flange for connecting the first flange to the second flange (in particular also by using a nut).

The first flange and the second flange extend in a longitudinal direction of the tower of the wind turbine. In particular, when the wall portion is used to assemble a wind turbine tower wall the first flange may extend in a vertical direction (or z-direction) along a vertical edge of the first wall segment, as the longitudinal direction of the tower may be the vertical direction. Thereby, adjacent wall segments of the wind turbine tower wall (being arranged side by side) may be advantageously connected using flange connection surfaces opposing each other (for example by pressing the flange connection surfaces together using at least one bolt). In particular, when assembled into a wind turbine tower wall the first flange and the second flange may protrude to an inside of the tower. Thereby, a smooth outside surface of the wind turbine tower wall may be provided. Further, a stability of the vertical connections of adjacent wall segments may be increased. Further, by providing the first flange at the first wall segment and the second flange at the second wall segment welding of adjacent wall segments may be avoided, thus simplifying an assembly of a wind turbine tower wall from individual wall segments.

Further the connection plate may provide horizontal connections of the first wall segment and the third wall segment, when the wall portion is used to assemble a wind turbine tower wall.

In particular, a wind turbine wall may be assembled from plural (such as 10, 20, 30, 40 or even more) wall segments. Thereby, the size of the individual wall segments may be small enough to be easily transported on a truck or on a train. Nevertheless, the assembled wind turbine tower wall may have a larger size than conventional wind turbine tower walls. In particular, the wind turbine tower wall may have a diameter of more than 4 m, in particular more than 6 m, in particular more than 10 m, and may have a height larger than 60 m, in particular larger than 100 m, further in particular larger than 150 m.

At the top of the wind turbine tower a nacelle may be mounted comprising a hub at which one or more rotor blades are fixed. Further, the nacelle may comprise a rotor driving a generator, wherein the rotor is connected to the hub such that rotating the rotor by the connected rotor blades causes generating electric energy output by the electric generator. Since at higher elevations a wind velocity may be higher than in lower elevations the wind turbine may produce more electric energy or power than a conventional wind turbine.

The connection plate may comprise a metal, such as steel, iron, and/or copper. The connection plate may have an extent in two different lateral directions which is much larger than in a thickness direction perpendicular to the two lateral directions (for example 10 times, 100 times, 200 times larger). The connection plate may be a component separate from each of the three wall segments and may be fixed to the first wall segment and/or to the third wall segment using at least one bolt and/or nut.

Thereby, the surface portion of the connection plate may come into direct or indirect contact with the front side surface portion of the first wall segment. Further, the other surface portion of the connection plate may come in direct or indirect contact with the front side surface portion of the third wall segment. Direct contact thereby means that no (macroscopic) structure is placed between the two surface portions being in contact with each other. Thereby, it may not be excluded that contaminating elements, compounds or layer(s) are arranged between the two surface portions being in direct contact with each other. Indirect contact between the two surface portions thereby means that a macroscopic structure is placed between the two surface portions. The mechanical connection strength of the connection between the surface portion of the connection plate and the front side surface portion of the first wall segment may result from friction between the surface portion of the connection plate and the front side surface portion of the first wall segment. The friction may be increased by pressing the surface portions together, for example by using one or more bolts arranged into one or more holes provided in the connection plate and the first wall segment and tightening them.

By allowing a direct or indirect contact between the surface portions and by pressing the surface portions together by an adjustable pressure the friction between the contacting surface portions may be appropriately adjusted such as to generate an appropriate connection strength between the connection plate and the first wall segment. Similar considerations also hold for the connection strength between the connection plate and the third wall segment.

Assembled into a wind turbine tower wall the connection plate may provide a connection between the first wall segment and the third wall segment arranged on top of each other. Thereby, the connection plate may provide a connection between the wall segments along a horizontal line.

In particular, a portion of the connection plate protruding the edge at the other lateral side of the first wall segment is mounted at the third wall segment and a portion of the connection plate protruding the edge at the lateral side of the third wall segment is mounted at the first wall segment.

In particular the three wall segments may comprise steel plates for assembling a wind turbine tower, wherein the steel plates are connected by an advantageous combination of bolt tightened inwardly facing flanges on vertical connections and by means of splice plates (connection plates) on horizontal connections between the steel plates.

In particular, the connection plate may have an extent at least 50%, in particular 75%, in particular 90% of an extent of the edge at the other lateral side of the first wall segment. In particular, the extent of the connection plate may be substantially the same as an extent of the edge at the other lateral side of the first wall segment.

In particular, an extent of the first flange may be at least 50%, in particular 75%, in particular 90% of an extent of the first wall segment at the lateral side. In particular, an extent of the first flange may be substantially equal to an extent of the first wall segment at the lateral side.

According to an embodiment the first wall segment and the second wall segment are laterally spaced apart from each other in a first direction. In particular, the first direction may be a horizontal direction, when the wall portion is assembled into a wind turbine tower wall. In particular, the first wall segment and the second wall segment may be arranged side by side such that a flange connection surface of the first flange is in direct or indirect contact with a flange connection surface of the second flange. Thus, the first wall segment and the second wall segment may be in direct or indirect contact with each other via the first flange and the second flange. Thereby, an annular wind turbine tower wall section may be assembled by plural wall segments connected side by side by corresponding flange pairs.

According to an embodiment the first wall segment and the third wall segment are laterally spaced apart from each other in a second direction different from the first direction. In particular, the second direction may be a vertical direction when the wall portion is used to build up a wind turbine tower wall. Thereby, a height of the wind turbine tower wall may be increased by placing plural wall segments on top of each other, wherein adjacent wall segments may be connected by plural connection plates connecting adjacent wall segments being spaced apart in the vertical direction. Thereby, the connection plate(s) may provide connection between adjacent wall segments along a horizontal line. Thereby, plural annular wind turbine tower wall sections (each comprised of plural wall segments connected side by side by corresponding flange pairs) may be connected on top of each other using one or more connection plates. Thereby, a great degree of flexibility with respect to a size, geometry and other construction properties in the construction of a wind turbine tower wall may be provided.

According to an embodiment the edge of the first wall segment is adjacent to the edge of the third wall segment. In particular, the edge of the first wall segment may be in contact with the edge of the third wall segment. Thereby, the wall portion may be a tight wall portion.

According to an embodiment the surface portion of the connection plate and the other surface portion of the connection plate are arranged on a same side of the connection plate. Thereby, the front side surface portion of the first wall segment and the front side surface portion of the third wall segment may be flush with each other. Thereby, a smooth wall portion may be provided. Further, a stability and/or stiffness of the wall portion (in particular when used in a wind turbine tower wall) may be improved, as a load force line may run through the first wall segment as well as through the third wall segment in a vertical direction.

According to an embodiment the surface portion of the connection plate is in contact with the front side surface portion of the first wall segment. In particular, the surface portion of the connection plate may be in direct contact (in particular having no macroscopic structure placed in between) with the front side surface portion of the first wall segment. Nevertheless, some contamination, such as an oxide layer, contaminating elements or compounds, or a dust or soil layer may be present between the surface portion of the connection plate and the front side surface portion of the first wall segment. Direct contact between the surface portion of the connection plate and the front side surface portion of the first wall segment may increase a friction between these surface portions to thereby increase the connection strength between the connection plate and the first wall segment. A connection between the connection plate and the tower wall portion may be provided in a similar way.

According to an embodiment a friction increasing material is arranged between the surface portion of the connection plate and the front side surface portion of the first wall segment. Thereby, a friction between the surface portion of the connection plate and the front side surface portion of the first wall segment having no friction increasing material arranged in between may be less than the friction between the surface portion of the connection plate and the front side surface portion of the first wall segment having the friction increasing material arranged in between. Thereby, the pressure pressing the surface portion of the connection plate and the front side surface portion of the first wall segment should be the same for determining whether the friction is increased or not. Further the surface portions of the connection and/or the (first) wall segment may be pre-treated by spray-metalishing, mechanical abrasion, abrasive blasting, chemical treatment, electro chemical treatment and/or treatment with barrier creating paint.

According to an embodiment the wall portion further comprises a further connection plate a surface portion of which being mounted at a back side surface portion of the first wall segment, wherein the back side surface portion of the first wall segment is opposite to the front side portion of the first wall segment, wherein another surface portion of the further connection plate is mounted at a back side surface portion of the third wall segment, and wherein the back side surface portion of the third wall segment is opposite to the front side portion of the third wall segment.

The further connection plate may in particular be arranged opposite to the connection plate and may in particular be of a similar shape and/or structure as the connection plate. By providing the connection plate and the further connection plate a connection strength may be improved and enhanced, as the further connection plate provides additional friction. In particular, the backside surface portion of the first wall segment and the backside surface portion of the third wall segment may be flush with each other. In particular, the connection plate and/or the further connection plate may have a shape that is planar, curved, cylindrical, and/or conical.

According to an embodiment a thickness of at least one of the connection plate and the further connection plate amounts to at least half of a thickness of at least one of the first wall segment and the third wall segment. Thereby, by providing two connection plates each of them may be provided thinner than in the case of only one connection plate connecting the first wall segment to the third wall segment.

According to an embodiment the connection plate and/or the further connection plate is mounted using a bolt and/or a nut. Thereby, welding the connection plate and/or the further connection plate to the first wall segment and/or the third wall segment may be avoided, thus simplifying the assembly and setup of the wind turbine tower wall.

According to an embodiment at least one of the first wall segment, the second wall segment and the third wall segment comprises steel, in particular stainless steel. Thereby, a very rigid and stable wall portion for a tower of a wind turbine may be provided.

According to an embodiment the first flange of the first wall segment is integrally formed with the first wall segment, in particular by bending. According to another embodiment the first flange of the first wall segment is integrally formed with the first wall segment by casting. Thereby, the first flange may be manufactured in a simple way. According to an embodiment the first wall segment (or any of the three wall segments) may be manufactured by rolling a metal, in particular by rolling steel. Further, after-treatment by bending a portion of the first wall segment may be employed for forming the first flange.

According to an embodiment the first flange of the first wall segment is a component separate from the first wall segment and is connected to the first wall segment. Thereby, the manufacturing the first wall segment may be simplified as the first wall segment may be prepared or manufactured by rolling steel and connecting the separate first flange after having rolled the steel. The connection may be provided by a bolt and/or a nut, for example. Alternatively, the first flange may be welded to a metal structure to complete the first wall segment.

According to an embodiment a wind turbine tower wall is provided which comprises a wind turbine tower wall portion according to an embodiment as described above, wherein the first flange of the first wall segment protrudes into an inside of a tower defined by the wind turbine tower wall. Thereby, a smooth outer surface of the wind turbine tower wall may be provided improving an aesthetic appearance of the wind turbine tower wall.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Thereby, elements, components and/or method steps similar in structure and/or function are denoted by reference signs differing only in the first position. As far as an element, a component, or a method step is not described in detail with respect to a particular embodiment the description of the corresponding element, component, or method step with respect to another embodiment may serve as an auxiliary description for this element, component, or method step in the particular embodiment.

### Brief Description of the Drawings

Figure 1 schematically illustrates a wall portion for a tower of a wind turbine according to an embodiment;
Figure 2 schematically illustrates a cross-sectional view of two wall segments of the wall portion illustrated in Figure 1 and illustrates the connection between the two wall segments;
Figure 3 schematically illustrates a cross-sectional view of two wall segments comprised in the wall portion illustrated in Figure 1 and illustrates the connection between the two wall segments.

### Detailed Description

The illustration in the drawing is schematically. It is noted that in different figures, similar or identical elements are provided with the same reference signs or with reference signs, which are different from the corresponding reference signs only within the first digit.

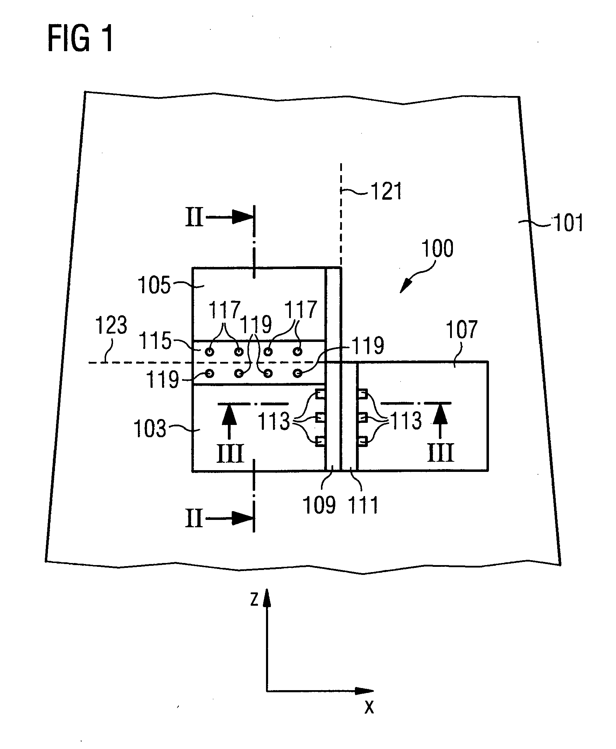

Figure 1 schematically illustrates a side view of a wall portion 100 for a tower 101 of a wind turbine. In the illustrated embodiment the wind turbine tower wall 101 has a slightly conical shape such that a diameter of the wind turbine tower wall 101 decreases for an increasing height along the vertical direction z of the tower. In other embodiments the wind turbine tower wall may have a cylindrical shape, a polygonal shape or any other shape.

The wind turbine tower wall 101 is assembled from plural wall segments from which only the wall segments 103, 105 and 107 are shown. The wall segments 103, 105 and 107 are connected to each other to form the wall portion 100 for a tower of a wind turbine. The wall segment 103 has a flange 109 formed integrally with the wall segment 103. The flange 109 protrudes inwardly into an inside of the wind turbine tower which is defined by the wind turbine tower wall 101. The wall segment 107 also comprises a flange 111 protruding into an inside of the wind turbine tower and being opposite to the flange 109 of the wall segment 103. The flanges 109 and 111 are connected to each other by bolts 113. The flange 109 is arranged at a lateral side of the wall segment 103 such that the flange 109 extends primarily in the vertical z-direction.

The wall segment 105 arranged above the wall segment 103 is connected to the wall segment 103 using a splice plate (connection plate) 115, wherein an upper portion of the slice plate 115 is connected to the upper wall segment 105 using bolts 117 and a lower portion of the splice plate 115 is connected to the lower wall segment 103 by bolts 119.

The wind turbine tower wall 101 thus comprises steel plates 103, 105 and 107 which are united at vertical (along the z-axis) connections 121 by inwardly facing flanges 109, 111 and at horizontal (along the x-axis and/or y-axis) connections 123 by means of slice plate 115 which is connected to the steel plates 103, 105 by bolts 117, 119.

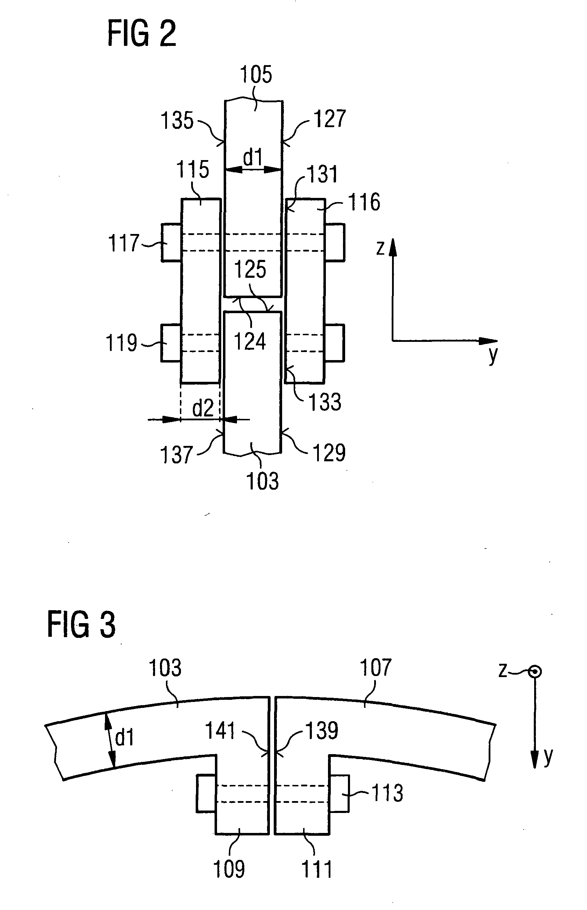

Figure 2 schematically illustrates a cross-sectional view (along line IIA in Fig. 1) of the horizontal connection by means of the splice plate 115 arranged at an outside surface of the wind turbine tower wall 101 and a splice plate 116 arranged in an inside of the wind turbine tower wall 101. The wall segment 105 is arranged in the vertical direction z above the wall segment 103 such that the wall segment 105 and the wall segment 103 are in an "end-to-end" configuration such that an lower edge 124 of the wall segment 105 is adjacent to an upper edge 125 of the wall segment 103.

Further, a back surface 127 of the wall segment 105 is flush with a back surface 129 of the wall segment 103. Further, a portion of the back surface 127 of the wall segment 105 is in contact with a surface portion 131 of the splice plate 116. Thereby, pressure is applied by tightening the bolt 117 such that a friction resistance is generated between the surface portion 131 of the splice plate 116 and a portion of the back surface 127 of the wall segment 105.

Another surface portion 133 of the splice plate 116 is in contact with a portion of the back surface 129 of the wall segment 103, wherein also a friction resistance between the splice plate 116 and the wall segment 103 is generated by tightening the bolt 119.

Thereby, the connection between the wall segment 105 and the wall segment 103 may be achieved by having a second splice plate 115 arranged opposite to the splice plate 116 such that also between a front surface 135 and the splice plate 115 as well as between the front side surface 137 and the splice plate 115 friction is generated. When using two splice plates 115 and 116, a thickness d2 of the splice plates 115, 116 may be greater than half of a thickness d1 of each of the wall segments 105, 103.

Figure 3 schematically illustrates a cross-sectional view (along line IIB in Fig. 1) of the vertical connection using flanges 109, 111, as illustrated in Figure 1. In this cross-sectional view the vertical z-axis is perpendicular to the drawing plane. In the illustrated embodiment the wall segments 103 and 107 have a curved shape in cross-section, in particular they have a shape of a cylinder segment. In other embodiments the wall segments 103, 107 may have a planar shape, such as for assembling a polygonal wind turbine tower wall.

The wall segments 103, 107 are arranged side by side such that the flanges 109, 111 are opposite to each other, wherein a flange connection surface 139 of the flange 111 is in direct contact with a flange connection surface 141 of the flange 109. A contact pressure between the flange connection surfaces 139, 141 is adjusted by tightening a bolt 113 such that a friction resistance is established between the flange connection surfaces 139 and 141. Thereby, a vertical connection between the wall segments 103 and 107 is established.

The use of a segmented construction of a wind turbine tower may overcome the dimensional restrictions during transportation. The individual wall segments 103, 107 and 105 may easily be transported using for example a truck or a train. By using splice plates 115, 116 at horizontal connections between wall segments it may be ensured that stresses, such as gravity forces, are transferred between the united steel plates or wall segments in an advantageous manner so that the dimensions of the steel construction as a whole may be minimized.

Steel plates or wall segments bolted together by bolt 113, 117, 119 may eliminate the welding process and subsequent control of welds as is required in conventional methods for manufacturing a wind turbine tower wall. Further, the connections may have very good fatigue properties and moreover the plates may be easily assembled.

By using inwardly facing flanges 109, 111 for construction on the vertical connections 121 of the wall segments 103 and 107 it may be ensured that sufficient connections between the wall segments or steel plates are made. The facing flanges 109, 111 for the vertical connections may have the result that the overall stiffness of the wall portion structure 100 or plate structure is enhanced i.e. the buckling capacity on the tower may be increased. This in turn may have the advantage that the dimensions of the wall segments or steel plates may be decreased. Furthermore, the use of flanges 109, 111 which are connected to each other inside the tower avoids a tightening of bolts from the outside of the tower, thus simplifying the construction and improving the aesthetic appearance of the tower.

By combining the two types of connections for vertical and horizontal connections, an advantageous tower construction may be made. The construction may have also the advantage that the dimensions of the steel plates (wall segments) may be decreased, thereby decreasing the costs.

For one embodiment the splice plate may be connected to the flat plates or wall segments by means of bolts and nuts. For various embodiments the plates or wall segments to be united or connected and/or the splice plates 115, 116 may be made of steel or of a rust resistance steel in order to make surface treatment redundant.

For various embodiments the plates to be united or to be connected and/or the splice plates may be pre-treated with friction creating material on the joining surfaces 131, 127, 129, 133. This treatment may for various embodiments by spray metalishing and/or treatment with barrier creating paint.

For various embodiments the flange connection may further comprise flanges divided into several parts which are then bolted together alternately. This means that flanges with a very large cross-section may be avoided.

For various embodiments of the invention the said vertical flanges may be separate flange constructions attached to the wall segments or steel plate or the flanges may preferably be bended parts of the wall segments or steel plates.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wall portion for a tower of a wind turbine, the wall portion comprising:
• a first wall segment (103) having a first flange (109) at a first lateral side of the first wall segment;
• a connection plate (115) having a first surface portion (133) being mounted at a front side surface portion (129) of the first wall segment, the connection plate protruding an edge at a second lateral side of the first wall segment;
• a second wall segment (107) having a second flange (111) at a first lateral side of the second wall segment, wherein the second flange is mechanically connected to the first flange; and
• a third wall segment (105), wherein a second surface portion (131) of the connection plate (115) is mounted at a front side surface portion (127) of the third wall segment, the connection plate protruding an edge at a lateral side of the third wall segment,
wherein the first flange and the second flange extend in a longitudinal direction of the tower of the wind turbine, wherein the wall portion further comprises:
• a further connection plate (116) a surface portion of which being mounted at a back side surface portion of the first wall segment,
wherein the back side surface portion of the first wall segment is opposite to the front side portion of the first wall segment,
wherein another surface portion of the further connection plate is mounted at a back side surface portion of the third wall segment, and
wherein the back side surface portion of the third wall segment is opposite to the front side portion of the third wall segment,
wherein a thickness (d2) of the connection plate and the further connection plate amounts to at least half of a thickness (d1) of each of the first wall segment and the third wall segment and to less than the thickness (d1) of each of the first wall segment and the third wall segment.

2. The wall portion according to claim 1, wherein the first wall segment and the second wall segment are laterally spaced apart from each other in a first direction (x).

3. The wall portion according to claim 1 or 2, wherein the first wall segment and the third wall segment are laterally spaced apart from each other in a second direction (z) different from the first direction.

4. The wall portion according to one of claims 1 to 3, wherein the edge (125) of the first wall segment is adjacent to the edge (124) of the third wall segment.

5. The wall portion according to one of claims 1 to 4, wherein the surface portion of the connection plate and the other surface portion of the connection plate are arranged on a same side of the connection plate.

6. The wall portion according to one of claims 1 to 5, wherein the surface portion of the connection plate is in contact with the front side surface portion of the first wall segment.

7. The wall portion according to one of claims 1 to 5, wherein a friction increasing material is arranged between the surface portion of the connection plate and the front side surface portion of the first wall segment.

8. The wall portion according to any of claims 1 to 7, wherein the connection plate and/or the further connection plate is mounted using a bolt (117, 119) and/or a nut.

9. The wall portion according to any of claims 1 to 8, wherein the first wall segment, the second wall segment and/or the third wall segment comprises steel.

10. The wall portion according to any of claims 1 to 9, wherein the first flange of the first wall segment is integrally formed with the first wall segment, in particular by bending.

11. The wall portion according to any of claims 1 to 10, wherein the first flange of the first wall segment is a component separate from the first wall segment and connected to the first wall segment.

12. A wind turbine tower wall, comprising a wind turbine tower wall portion according to one of claims 1 to 11, wherein the first flange of the first wall segment protrudes into an inside of a tower defined by the wind turbine tower wall.

## Patentansprüche

1. Wandabschnitt für einen Turm einer Windturbine, wobei der Wandabschnitt Folgendes umfasst:
- ein erstes Wandsegment (103) mit einem ersten Flansch (109) an einer ersten lateralen Seite des ersten Wandsegments,
- eine Verbindungsplatte (115) mit einem ersten Flächenabschnitt (133), der an einem vorderseitigen Flächenabschnitt (129) des ersten Wandsegments angebracht ist, wobei die Verbindungsplatte mit einer Kante an einer zweiten lateralen Seite des ersten Wandsegments vorragt,
- ein zweites Wandsegment (107) mit einem zweiten Flansch (111) an einer ersten lateralen Seite des zweiten Wandsegments, wobei der zweite Flansch mit dem ersten Flansch mechanisch verbunden ist, und
- ein drittes Wandsegment (105), wobei ein zweiter Flächenabschnitt (131) der Verbindungsplatte (115) an einem vorderseitigen Flächenabschnitt (127) des dritten Wandsegments angebracht ist, wobei die Verbindungsplatte mit einer Kante an einer lateralen Seite des dritten Wandsegments vorragt,
wobei der erste und der zweite Flansch in Längsrichtung des Turms der Windturbine verlaufen, wobei der Wandabschnitt ferner Folgendes umfasst:
- eine weitere Verbindungsplatte (116), von der ein Flächenabschnitt an einem rückseitigen Flächenabschnitt des ersten Wandsegments angebracht ist,
wobei der rückseitige Flächenabschnitt des ersten Wandsegments dem vorderseitigen Abschnitt des ersten Wandsegments gegenüberliegt,
wobei ein weiterer Flächenabschnitt der weiteren Verbindungsplatte an einem rückseitigen Flächenabschnitt des dritten Wandsegments angebracht ist und
wobei der rückseitige Flächenabschnitt des dritten Wandsegments dem vorderseitigen Abschnitt des dritten Wandsegments gegenüberliegt,
wobei eine Dicke (d2) der Verbindungsplatte und der weiteren Verbindungsplatte mindestens der Hälfte einer Dicke (d1) des ersten beziehungsweise des dritten Wandsegments sowie weniger als der Dicke (d1) des ersten beziehungsweise des dritten Wandsegments entspricht.

2. Wandabschnitt nach Anspruch 1, bei dem das erste und das zweite Wandsegment in einer ersten Richtung (x) lateral voneinander beabstandet sind.

3. Wandabschnitt nach Anspruch 1 oder 2, bei dem das erste und das dritte Wandsegment in einer zweiten Richtung (z) lateral voneinander beabstandet sind, die sich von der ersten Richtung (x) unterscheidet.

4. Wandabschnitt nach einem der Ansprüche 1 bis 3, bei dem die Kante (125) des ersten Wandsegments neben der Kante (124) des dritten Wandsegments liegt.

5. Wandabschnitt nach einem der Ansprüche 1 bis 4, bei dem der Flächenabschnitt der Verbindungsplatte und der andere Flächenabschnitt der Verbindungsplatte auf der gleichen Seite der Verbindungsplatte angeordnet sind.

6. Wandabschnitt nach einem der Ansprüche 1 bis 5, bei dem der Flächenabschnitt der Verbindungsplatte mit dem vorderseitigen Flächenabschnitt des ersten Wandsegments in Kontakt ist.

7. Wandabschnitt nach einem der Ansprüche 1 bis 5, bei dem ein die Reibung verstärkendes Material zwischen dem Flächenabschnitt der Verbindungsplatte und dem vorderseitigen Flächenabschnitt des ersten Wandsegments angeordnet ist.

8. Wandabschnitt nach einem der Ansprüche 1 bis 7, bei dem die Verbindungsplatte und/ oder die weitere Verbindungsplatte unter Verwendung einer Schraube (117, 119) und/ oder einer Mutter angebracht ist.

9. Wandabschnitt nach einem der Ansprüche 1 bis 8, bei dem das erste, das zweite und/ oder das dritte Wandsegment Stahl umfasst.

10. Wandabschnitt nach einem der Ansprüche 1 bis 9, bei dem der erste Flansch des ersten Wandsegments insbesondere durch Biegen einstückig mit dem ersten Wandsegment ausgebildet ist.

11. Wandabschnitt nach einem der Ansprüche 1 bis 10, bei dem es sich bei dem ersten Flansch des ersten Wandsegments um eine von dem ersten Wandsegment getrennte und mit dem ersten Wandsegment verbundene Komponente handelt.

12. Windturbinenturmwand mit einem Windturbinenturmwandabschnitt nach einem der Ansprüche 1 bis 11, wobei der erste Flansch des ersten Wandsegments in einen Innenraum eines Turms ragt, der von der Windturbinenturmwand umgrenzt ist.

## Revendications

1. Partie de paroi pour un mât d'une éolienne, la partie de paroi comprenant :
• un premier segment de paroi (103) ayant une première bride (109) au niveau d'un premier côté latéral du premier segment de paroi ;
• une plaque de raccordement (115) ayant une première partie de surface (133) qui est montée au niveau d'une partie de surface côté frontal (129) du premier segment de paroi, la plaque de raccordement faisant dépasser un bord au niveau d'un deuxième côté latéral du premier segment de paroi ;
• un deuxième segment de paroi (107) ayant une deuxième bride (111) au niveau d'un premier côté latéral du deuxième segment de paroi, dans lequel la deuxième bride est raccordée mécaniquement à la première bride ; et
• un troisième segment de paroi (105), dans lequel une deuxième partie de surface (131) de la plaque de raccordement (115) est montée au niveau d'une partie de surface de côté frontal (127) du troisième segment de paroi, la plaque de raccordement faisant dépasser un bord au niveau d'un côté latéral du troisième segment de paroi,
dans laquelle la première bride et la deuxième bride s'étendent dans une direction longitudinale du mât de l'éolienne, dans laquelle la partie de paroi comprend en outre :
• une plaque de raccordement supplémentaire (116) dont une partie de surface est montée au niveau d'une partie de surface côté arrière du premier segment de paroi,
dans laquelle la partie de surface côté arrière du premier segment de paroi est à l'opposé de la partie côté frontal du premier segment de paroi,
dans laquelle une autre partie de surface de la plaque de raccordement supplémentaire est montée au niveau d'une partie de surface côté arrière du troisième segment de paroi, et dans laquelle la partie de surface côté arrière du troisième segment de paroi est à l'opposé de la partie côté frontal du troisième segment de paroi,
dans laquelle une épaisseur (d2) de la plaque de raccordement et de la plaque de raccordement supplémentaire s'élève à au moins la moitié d'une épaisseur (d1) de chacun du premier segment de paroi et du troisième segment de paroi et à moins que l'épaisseur (d1) de chacun du premier segment de paroi et du troisième segment de paroi.

2. Partie de paroi selon la revendication 1, dans laquelle le premier segment de paroi et le deuxième segment de paroi sont espacés latéralement l'un de l'autre dans une première direction (x).

3. Partie de paroi selon la revendication 1 ou 2, dans laquelle le premier segment de paroi et le troisième segment de paroi sont espacés latéralement l'un de l'autre dans une deuxième direction (z) différente de la première direction.

4. Partie de paroi selon l'une des revendications 1 à 3, dans laquelle le bord (125) du premier segment de paroi est adjacent au bord (124) du troisième segment de paroi.

5. Partie de paroi selon l'une des revendications 1 à 4, dans laquelle la partie de surface de la plaque de raccordement et l'autre partie de surface de la plaque de raccordement sont disposées sur un même côté de la plaque de raccordement.

6. Partie de paroi selon l'une des revendications 1 à 5, dans laquelle la partie de surface de la plaque de raccordement est en contact avec la partie de surface côté frontal du premier segment de paroi.

7. Partie de paroi selon l'une des revendications 1 à 5, dans laquelle un matériau augmentant le frottement est disposé entre la partie de surface de la plaque de raccordement et la partie de surface côté frontal du premier segment de paroi.

8. Partie de paroi selon l'une quelconque des revendications 1 à 7, dans laquelle la plaque de raccordement et/ou la plaque de raccordement supplémentaire sont montées à l'aide d'un boulon (117, 119) et/ou d'un écrou.

9. Partie de paroi selon l'une quelconque des revendications 1 à 8, dans laquelle le premier segment de paroi, le deuxième segment de paroi et/ou le troisième segment de paroi comprennent de l'acier.

10. Partie de paroi selon l'une quelconque des revendications 1 à 9, dans laquelle la première bride du premier segment de paroi est formée d'un seul tenant avec le premier segment de paroi, en particulier par cintrage.

11. Partie de paroi selon l'une quelconque des revendications 1 à 10, dans laquelle la première bride du premier segment de paroi est un composant séparé du premier segment de paroi et raccordée au premier segment de paroi.

12. Paroi de mât d'éolienne, comprenant une partie de paroi de mât d'éolienne selon l'une quelconque des revendications 1 à 11, dans laquelle la première bride du premier segment de paroi dépasse dans un intérieur d'un mât défini par la paroi de mât d'éolienne.
